# EUROPÄISCHE PATENTSCHRIFT

(11) **EP 2 612 730 B1**
(45) Veröffentlichungstag und Bekanntmachung des Hinweises auf die Patenterteilung: **08.09.2021**
(21) Anmeldenummer: 12195397.0
(22) Anmeldetag: 04.12.2012
(51) Int. Cl.: B25D 11/08, B23Q 5/12, B25D 11/02, B25D 16/00

(54) **Handwerkzeugvorrichtung**
Handheld tool apparatus
Dispositif d'outil manuel

(30) Priorität: 27.12.2011 DE 102011089919
(43) Veröffentlichungstag der Anmeldung: 10.07.2013
(73) Patentinhaber: Robert Bosch GmbH, 70442 Stuttgart (DE)
(72) Erfinder: Blum, Jens, 70794 Filderstadt (DE); Roehm, Heiko, 70176 Stuttgart (DE); Herr, Tobias, 70569 Stuttgart (DE)

(56) Entgegenhaltungen:
- EP-A1- 1 857 228
- EP-A1- 2 062 697
- EP-A2- 2 554 306
- DE-A1-102006 009 922
- None

## Beschreibung

### Stand der Technik

Es ist bereits eine Handwerkzeugvorrichtung mit zumindest einer Bedienvorrichtung, über die zumindest eine erste Übersetzung und eine zweite Übersetzung und ein Schlagbohrmodus einstellbar sind, vorgeschlagen worden. Derartige Handwerkzeugvorrichtungen sind zum Beispiel aus EP 2 062 697 A1, EP 1 857 228 A1 und EP 2 554 306 A2 bekannt. Eine Handwerkzeugvorrichtung gemäß dem Oberbegriff des Anspruchs 1 ist aus EP 2 062 697 A1 bekannt.

### Offenbarung der Erfindung

Die Erfindung geht aus von einer Handwerkzeugvorrichtung mit zumindest einer Bedienvorrichtung, über die zumindest eine erste Übersetzung und eine zweite Übersetzung und ein Schlagbohrmodus einstellbar sind.

Es wird ein Handwerkzeugvorrichtung mit den Merkmalen des Anspruchs 1 vorgeschlagen. Unter einer "Bedienvorrichtung" soll in diesem Zusammenhang insbesondere eine Vorrichtung verstanden werden, über die von einem Bediener ein Betriebsmodus zumindest eines Schlagwerks der Handwerkzeugvorrichtung und eine Übersetzung insbesondere eines Planetengetriebes der Handwerkzeugvorrichtung einstellbar sind. Vorzugsweise ist die Bedienvorrichtung dazu vorgesehen, dem Bediener einen aktuell eingestellten Betriebszustand darzustellen, und zwar vorteilhaft durch eine Anordnung von zumindest einem Bedienelement der Bedienvorrichtung. Unter "vorgesehen" soll insbesondere speziell ausgelegt und/oder ausgestattet verstanden werden. Insbesondere soll unter einer "Schutzvorrichtung" eine Vorrichtung verstanden werden, die den Bediener bei einem Arbeitsvorgang schützt. Vorzugsweise ist die Schutzvorrichtung dazu vorgesehen, den Bediener, insbesondere bei einem Blockierfall in dem Schlagbohrmodus, durch eine Begrenzung eines maximalen Werkzeugdrehmoments zu schützen. Unter einem "Werkzeugdrehmoment" soll insbesondere ein von dem Werkzeugfutter insbesondere auf ein Einsatzwerkzeug bewirktes Drehmoment verstanden werden. Unter einem "maximalen Werkzeugdrehmoment" soll insbesondere ein Werkzeugdrehmoment verstanden werden, das in einem Betriebsmodus bei einem weichen Blockierfall auftritt. Vorzugsweise ist das maximale Werkzeugdrehmoment nach der Norm DIN EN 60745 zu bestimmen. Bei einem weichen Blockierfall wird das Werkzeugfutter von dem Einsatzwerkzeug langsam und gleichmäßig, insbesondere innerhalb von zwei Umdrehungen des Werkzeugfutters, abgebremst. Unter einer "Übersetzung" soll insbesondere ein Betriebsmodus verstanden werden, dem ein Verhältnis zwischen einer Drehzahl eines Rotors einer Antriebseinheit der Handwerkzeugvorrichtung und einem Werkzeugfutter der Handwerkzeugvorrichtung zugeordnet ist. Vorzugsweise weist die erste Übersetzung eine geringe maximale Drehzahl und ein großes maximales Werkzeugdrehmoment auf, das heißt insbesondere ein Werkzeugdrehmoment größer als 15 Nm. Vorzugsweise umfasst die zweite Übersetzung eine große maximale Drehzahl und ein geringes maximales Werkzeugdrehmoment, das heißt insbesondere ein Werkzeugdrehmoment kleiner als 15 Nm. Insbesondere soll unter einem "Schlagbohrmodus" ein Betriebsmodus der Handwerkzeugvorrichtung verstanden werden, bei der das Werkzeugfutter und insbesondere ein Schlagwerk der Handwerkzeugvorrichtung das Einsatzwerkzeug drehend und schlagend antreiben. Unter dem Begriff "einstellbar" soll insbesondere verstanden werden, dass der Bediener mittels der Bedienvorrichtung die Handwerkzeugvorrichtung zumindest in die erste Übersetzung, in die zweite Übersetzung und/oder in den Schlagbohrmodus versetzen kann. Vorzugsweise sind über die Bedienvorrichtung zudem zumindest ein Schraubmodus und ein Bohrmodus einstellbar. Des Weiteren könnten über die Bedienvorrichtung eine weitere Übersetzung und ein Meißelmodus einstellbar sein. Unter einem "Schraubmodus" soll insbesondere ein Betriebsmodus der Handwerkzeugvorrichtung verstanden werden, bei dem das Werkzeugfutter das Einsatzwerkzeug bis zum Erreichen eines einstellbaren maximalen Werkzeugdrehmoments drehend antreibt, und zwar insbesondere ohne eine Schlagbewegung. Unter einem "Bohrmodus" soll insbesondere ein Betriebsmodus der Handwerkzeugvorrichtung verstanden werden, bei dem das Werkzeugfutter das Einsatzwerkzeug bis zu einem von einem von der Antriebseinheit abhängigen maximalen Werkzeugdrehmoment drehend eintreibt, und zwar insbesondere ohne eine Schlagbewegung. Unter einem "Meißelmodus" soll insbesondere ein Betriebsmodus der Handwerkzeugvorrichtung verstanden werden, bei dem das Einsatzwerkzeug nur schlagend angetrieben wird. Insbesondere soll unter einem "Betrieb in der ersten Übersetzung" ein Betriebszustand verstanden werden, bei der die erste Übersetzung eingestellt ist. Unter dem Begriff "verhindern" soll in diesem Zusammenhang insbesondere verstanden werden, dass die Schutzvorrichtung einen gleichzeitigen Betrieb in der ersten Übersetzung und in dem Schlagbohrmodus ausschließt. Durch die erfindungsgemäße Ausgestaltung der Handwerkzeugvorrichtung ist konstruktiv einfach ein besonders sicherer Schlagbohrbetrieb möglich.

Erfindungsgemäß ist vorgesehen, dass die Schutzvorrichtung, wenn die erste Übersetzung eingestellt ist, ein Umschalten in den Schlagbohrmodus verhindert, wodurch eine besonders einfache, preiswerte und zuverlässige Konstruktion möglich ist. Vorteilhaft verhindert die Schutzvorrichtung ein Einrasten des Bedienelements in eine dem Schlagbohrmodus zugeordnete Stellung, wenn die erste Übersetzung eingestellt ist. Besonders vorteilhaft verhindert die Schutzvorrichtung ein Verschieben eines Bedienelements in eine dem Schlagbohrmodus zugeordnete Stellung, wenn die erste Übersetzung eingestellt ist. Alternativ könnte die Schutzvorrichtung einen Betrieb verhindern, wenn der Schlagbohrmodus und die erste Übersetzung gleichzeitig eingestellt sind, beispielsweise durch ein Öffnen einer mechanischen Kupplung oder insbesondere elektrisches Abschalten der Antriebseinheit.

Erfindungsgemäß ist vorgesehen, dass die Schutzvorrichtung, wenn der Schlagbohrmodus eingestellt ist, ein Umschalten in die erste Übersetzung verhindert, wodurch eine besonders einfache, preiswerte und zuverlässige Konstruktion erreicht werden kann. Vorteilhaft verhindert die Schutzvorrichtung ein Einrasten des Bedienelements in einer der zweiten Übersetzung zugeordneten Stellung, wenn der Schlagbohrmodus eingestellt ist. Besonders vorteilhaft verhindert die Schutzvorrichtung ein Verschieben eines Bedienelements in eine der ersten Übersetzung zugeordnete Stellung, wenn der Schlagbohrmodus eingestellt ist.

Ferner wird vorgeschlagen, dass ein maximales Werkzeugdrehmoment in der ersten Übersetzung mehr als 15 Nm beträgt, wodurch in dem Bohrmodus und dem Schraubmodus ein besonders wirkungsvoller Betrieb möglich ist.

Zudem wird vorgeschlagen, dass ein maximales Werkzeugdrehmoment in der zweiten Übersetzung weniger als 15 Nm beträgt, wodurch in dem Bohrmodus eine vorteilhaft hohe Drehzahl und in dem Schlagbohrmodus ein besonders sicherer Betreib erreicht werden kann.

Erfindungsgemäß ist vorgesehen, dass die Bedienvorrichtung ein erstes Bedienelement aufweist, über das die erste Übersetzung und die zweite Übersetzung einstellbar sind, wodurch konstruktiv einfach eine besonders bedienerfreundliche Wahl einer der Übersetzungen möglich ist. Unter einem "Bedienetement" soll insbesondere ein Bauteil verstanden werden, das eine von einer Bedienereingabe abhängige Kenngröße, insbesondere elektrisch und/oder vorteilhaft mechanisch, abgibt. Vorzugsweise ist das Bedienelement als ein, dem Fachmann als sinnvoll erscheinendes Bedienelement ausgebildet, besonders vorteilhaft als ein mechanisch wirkender Schalter.

Erfindungsgemäß ist vorgesehen, dass die Bedienvorrichtung ein zweites Bedienelement aufweist, über das zumindest der Schlagbohrmodus einstellbar ist, wodurch konstruktiv einfach eine Übertragung der Einstellung von den Bedienelementen auf ein Planetengetriebe und ein Schlagwerk der Handwerkzeugvorrichtung möglich ist.

Erfindungsgemäß ist vorgesehen, dass die Schutzvorrichtung zumindest teilweise einstückig mit der Bedienvorrichtung ausgebildet ist, wodurch mit einer vorteilhaft einfachen Konstruktion ein besonders sicherer Betrieb möglich ist. Unter "zumindest teilweise einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Zudem wird vorgeschlagen, dass die Handwerkzeugvorrichtung eine einstellbare Drehmomentbegrenzungseinheit umfasst, die dazu vorgesehen ist, ein maximales Werkzeugdrehmoment in einem Schraubmodus zu begrenzen, wodurch ein besonders komfortabler Betrieb im dem Schraubmodus erreicht werden kann. Vorzugsweise sind die Drehmomentbegrenzungseinheit und die Schutzvorrichtung voreinander getrennt ausgebildet. Insbesondere soll unter einer "Drehmomentbegrenzungseinheit" eine Einheit verstanden werden, die dazu vorgesehen ist, ein auf ein Werkstück, insbesondere auf eine Schraube, wirkendes maximales Werkzeugdrehmoment zu begrenzen. Unter "einstellbar" soll in diesem Zusammenhang insbesondere verstanden werden, dass ein maximales Werkzeugdrehmoment von einem Bediener in zumindest drei Stufen, vorteilhaft zumindest fünf Stufen, wählbar ist.

Weiterhin wird vorgeschlagen, dass die Bedienvorrichtung dazu vorgesehen ist, die Drehmomentbegrenzungseinheit in einen Bohrmodus zu deaktivieren, wodurch vorteilhaft hohe Werkzeugdrehmoment für einen Bohrbetrieb, insbesondere mit Bohrern, die einen großen Durchmesser aufweisen, bereitgestellt werden können. Insbesondere soll unter "deaktivieren" in diesem Zusammenhang verstanden werden, dass die Bedienvorrichtung ein Wirken der Drehmomentbegrenzungseinheit in dem Bohrmodus verhindert, wodurch ein maximales Werkzeugdrehmoment von einem Drehmoment der Antriebseinheit und der gewählten Übersetzung abhängig sind.

Des Weiteren geht die Erfindung aus von einem Handwerkzeug mit einer erfindungsgemäßen Handwerkzeugvorrichtung. Vorzugsweise ist das Handwerkzeug dazu vorgesehen, das Einsatzwerkzeug in einem Schraubmodus, in einem Bohrmodus, in einem Schraubbohrmodus und insbesondere in einem Meißelmodus anzutreiben.

### Zeichnung

Weitere Vorteile ergeben sich aus der folgenden Zeichnungsbeschreibung. In der Zeichnung sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Schnitt eines Handwerkzeugs mit einer erfindungsgemäßen Handwerkzeugvorrichtung,
- Fig. 2: einen teilweise freigestellten Schnitt durch ein Schlagwerk und ein Planetengetriebe der Handwerkzeugvorrichtung aus Figur 1,
- Fig. 3: eine erste Schnittfläche A des Schlagwerks der Handwerkzeugvorrichtung aus Figur 1,
- Fig. 4: eine zweite Schnittfläche B des Schlagwerks der Handwerkzeugvorrichtung aus Figur 1,
- Fig. 5: eine perspektivische Darstellung einer Schlagwerkspindel des Schlagwerks der Handwerkzeugvorrichtung aus Figur 1,
- Fig. 6: eine perspektivische Darstellung eines Schlägers des Schlagwerks der Handwerkzeugvorrichtung aus Figur 1,
- Fig. 7: eine Schnittfläche C einer ersten Planetengetriebestufe und einer ersten Schlagabschaltvorrichtung der Handwerkzeugvorrichtung aus Figur 1,
- Fig. 8: eine Schnittfläche D eines Steuerelements und einer zweiten Schlagabschaltvorrichtung der Handwerkzeugvorrichtung aus Figur 1,
- Fig. 9: eine perspektivische Schnittdarstellung eines Teils der Handwerkzeugvorrichtung aus Figur 1,
- Fig. 10: eine Schnittfläche E einer Spindelblockiervorrichtung der Handwerkzeugvorrichtung aus Figur 1,
- Fig. 11: eine Schnittfläche F durch Blockiermittel der Spindelblockiervorrichtung der Handwerkzeugvorrichtung aus Figur 1,
- Fig. 12: eine Schnittfläche G einer zweiten Planetengetriebestufe der Handwerkzeugvorrichtung aus Figur 1,
- Fig. 13: eine Schnittfläche H einer dritten Planetengetriebestufe der Handwerkzeugvorrichtung aus Figur 1,
- Fig. 14: eine Schnittfläche I einer vierten Planetengetriebestufe der Handwerkzeugvorrichtung aus Figur 1,
- Fig. 15: eine schematische Darstellung einer Bedienvorrichtung und einer Schutzvorrichtung der Handwerkzeugvorrichtung aus Figur 1 ,
- Fig. 16: ein alternatives Ausführungsbeispiel einer ersten Schlagabschaltvorrichtung einer erfindungsgemäßen Handwerkzeugvorrichtung,
- Fig. 17: ein weiteres Ausführungsbeispiel einer ersten Schlagabschaltvorrichtung einer erfindungsgemäßen Handwerkzeugvorrichtung,
- Fig. 18: ein alternatives Ausführungsbeispiel einer Schlagschaltfeder einer erfindungsgemäßen Handwerkzeugvorrichtung und
- Fig. 19: ein alternatives Ausführungsbeispiel einer Bedienvorrichtung und einer Schutzvorrichtung einer erfindungsgemäßen Handwerkzeugvorrichtung.

### Beschreibung der Ausführungsbeispiele

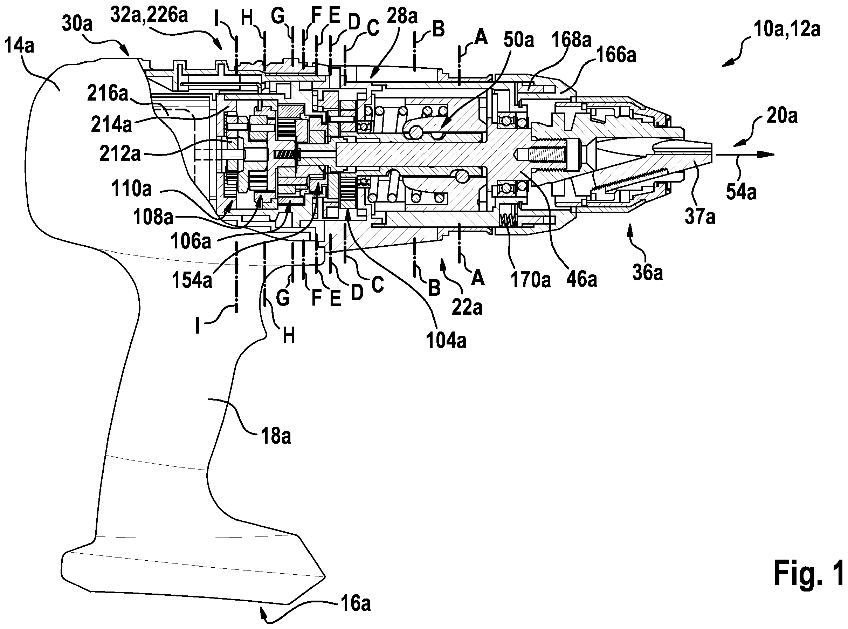

Figur 1 zeigt ein Handwerkzeug 10a. Das Handwerkzeug 10a ist als eine Schlagbohrschraubmaschine ausgebildet. Das Handwerkzeug 10a weist eine erfindungsgemäße Handwerkzeugvorrichtung 12a, ein Handwerkzeuggehäuse 14a und eine Akkuschnittstelle 16a auf. Die Akkuschnittstelle 16a ist dazu vorgesehen, die Handwerkzeugvorrichtung 12a aus einem hier nicht näher dargestellten Handwerkzeugakku mit einer elektrischen Energie zu versorgen. Das Handwerkzeuggehäuse 14a ist pistolenförmig ausgebildet. Das Handwerkzeuggehäuse 14a ist mehrteilig ausgebildet. Es umfasst einen Handgriff 18a, mittels dessen ein Bediener das Handwerkzeug 10a bei einem Arbeitsvorgang hält. Die Handwerkzeugvorrichtung 12a umfasst eine Werkzeugführungseinheit 20a, ein Schlagwerk 22a, eine erste Schlagabschaltvorrichtung 24a, eine zweite Schlagabschaltvorrichtung 26a, ein Planetengetriebe 28a, eine Antriebseinheit 30a, eine Bedienvorrichtung 32a und eine Drehmomentbegrenzungseinheit 34a.

Die Werkzeugführungseinheit 20a umfasst ein Werkzeugfutter 36a und eine Werkzeugspindel 38a. Das Werkzeugfutter 36a befestigt bei einem Arbeitsvorgang ein hier nicht dargestelltes Einsatzwerkzeug, beispielsweise einen Bohrer bzw. ein Schraubbit. Das Werkzeugfutter 36a befestigt das Einsatzwerkzeug kraftschlüssig. Das Werkzeugfutter 36a weist drei von einem Bediener bewegbar befestigte Spannbacken auf, die bei einem Arbeitsvorgang das Einsatzwerkzeug befestigen. Zudem befestigt das Werkzeugfutter 36a das Einsatzwerkzeug bei einem Arbeitsvorgang axial unbeweglich gegenüber dem Werkzeugfutter 36a und insbesondere der Werkzeugspindel 38a. Ein Teil des Werkzeugfutters 36a und die Werkzeugspindel 38a sind relativ zueinander unbeweglich miteinander verbunden. Hier sind das Werkzeugfutter 36a und die Werkzeugspindel 38a miteinander verschraubt. Die Handwerkzeugvorrichtung 12a weist ein Lagermittel 40a auf, das die Werkzeugspindel 38a auf einer dem Werkzeugfutter 36a zugewandten Seite lagert. Das Lagermittel 40a lagert die Werkzeugspindel 38a axial verschiebbar. Das Lagermittel 40a ist axial fest mit der Werkzeugspindel 38a verbunden. Das Lagermittel 40a ist axial bewegbar in dem Handwerkzeuggehäuse 14a gelagert. Die Handwerkzeugvorrichtung 12a weist ein weiteres Lagermittel 41a auf, das die Werkzeugspindel 38a auf einer dem Planetengetriebe 28a zugewandten Seite lagert. Das Lagermittel 41a ist als ein Wälzlager, hier als ein Nadellager, ausgebildet, wodurch eine spielarme Lagerung möglich ist. Das Lagermittel 41a lagert die Werkzeugspindel 38a axial verschiebbar. Einer Schlagwerkspindel 46a umschließt das Lagermittel 41a. Das Lagermittel 41a ist wirkungsmäßig zwischen der Werkzeugspindel 38a und der Schlagwerkspindel 46a angeordnet.

Die Werkzeugspindel 38a umfasst eine Schlagfläche 42a, auf die bei einem Schlagbohrbetrieb ein Schläger 44a des Schlagwerks 22a schlägt. Der Schläger 44a weist eine Masse auf, die maximal zwei Drittel so groß ist wie eine Masse der Werkzeugführungseinheit 20a. Hier ist die Masse des Schlägers 44a weniger als halb so groß wie die Masse der Werkzeugführungseinheit 20a. Die Masse des Schlägers 44a beträgt etwa 45 % der Masse der Werkzeugführungseinheit 20a.

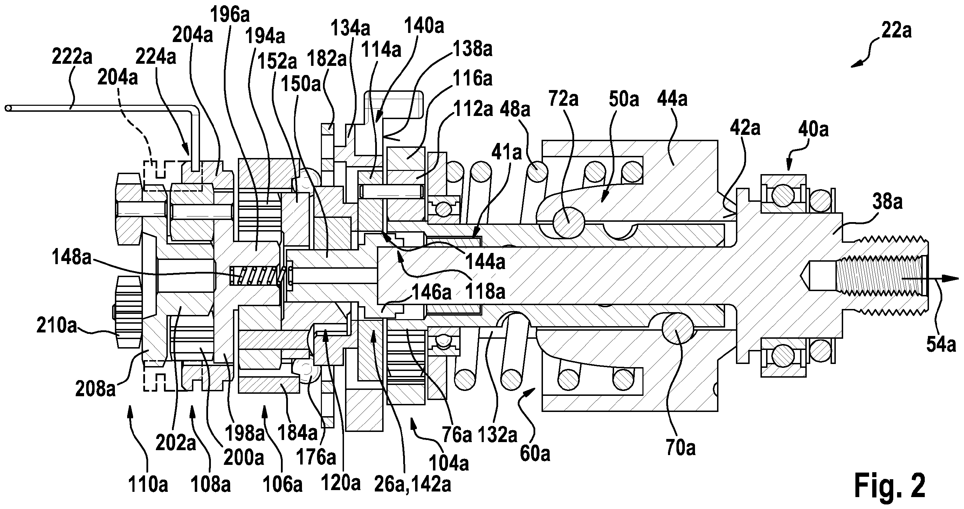

In der Figur 2 sind das Schlagwerk 22a und das Planetengetriebe 28a näher dargestellt. Das Schlagwerk 22a weist den Schläger 44a, die Schlagwerkspindel 46a, eine Schlagwerkfeder 48a, eine Schlägerantriebsvorrichtung 50a und eine Schlägerführung 52a auf. Der Schläger 44a ist in Schlagrichtung 54a translatorisch bewegbar gelagert. Die Schlagrichtung 54a ist parallel zu einer axialen Richtung der Schlagwerkspindel 46a ausgerichtet.

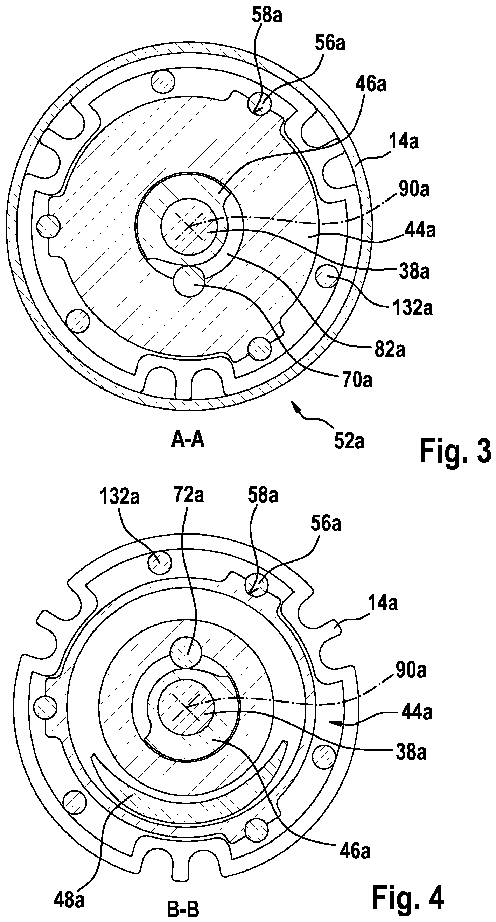

Die Figuren 3 und 4 zeigen eine Schnittfläche A und eine Schnittfläche B des Schlagwerks 22a. Die Schlägerführung 52a lagert den Schläger 44a relativ zu dem Handwerkzeuggehäuse 14a drehfest. Die Schlägerführung 52a weist drei Führungsstäbe 56a auf, auf denen der Schläger 44a gleitet. Die Führungsstäbe 56a sind regelmäßig um den Schläger 44a herum angeordnet. Der Schläger 44a weist Gleitflächen 58a auf, die die Führungsstäbe 56a auf einer Ebene senkrecht zur Schlagrichtung 54a um 180 Grad umschließen. Der Schläger 44a umschließt die Schlagwerkspindel 46a auf einer Ebene, die senkrecht zu der Schlagrichtung 54a ausgerichtet ist, um 360 Grad. Zudem umschließt der Schläger 44a die Werkzeugspindel 38a auf der Ebene um 360 Grad. Ferner umschließt die Schlagwerkspindel 46a auf der Ebene die Werkzeugspindel 38a um 360 Grad. Die Schlagwerkspindel 46a ist koaxial zu der Werkzeugspindel 38a angeordnet.

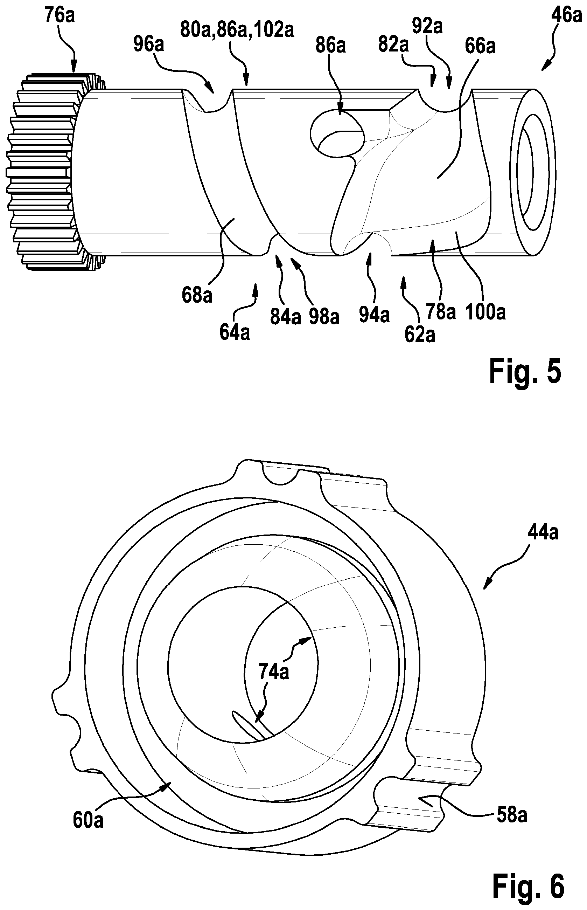

Die Schlagwerkfeder 48a beschleunigt den Schläger 44a vor einem Schlag in Schlagrichtung 54a. Dazu stützt das Handwerkzeuggehäuse 14a die Schlagwerkfeder 48a auf einer dem Schläger 44a abgewandten Seite ab. Die Schlagwerkfeder 48a drückt direkt gegen den Schläger 44a. Der Schläger 44a weist eine Federbefestigung 60a auf. Die Federbefestigung 60a ist als eine ringförmige Vertiefung ausgebildet. Figur 5 zeigt die Schlagwerkspindel 46a in einer perspektivischen Ansicht. Figur 6 zeigt den Schläger 44a in einer perspektivischen Ansicht. Die Schlägerantriebsvorrichtung 50a weist eine erste Kurvenführung 62a und eine zweite erste Kurvenführung 64a auf. Die Kurvenführungen 62a, 64a umfassen jeweils eine Führungskurve 66a, 68a und ein Verbindungsmittel 70a, 72a. Die Verbindungsmittel 70a, 72a sind kugelförmig ausgebildet. Der Schläger 44a lagert die Verbindungsmittel 70a, 72a relativ zu dem Schläger 44a ortsfest. Der Schläger 44a weist halbkugelförmige Befestigungsaussparungen 74a auf. Die Verbindungsmittel 70a, 72a gleiten bei einem Schlagbohrbetrieb in der Führungskurve 66a, 68a. Die Schlagwerkspindel 46a weist einen Teil der Kurvenführungen 62a, 64a auf, und zwar die Führungskurve 66a, 68a. Die Schlagwerkspindel 46a begrenzt einen Raum, in dem sich die Verbindungsmittel 70a, 72a bei einem Schlagbohrbetrieb bewegen.

Die Schlagwerkspindel 46a ist als eine Hohlwelle ausgebildet. Das Planetengetriebe 28a treibt die Schlagwerkspindel 46a an. Dazu weist die Schlagwerkspindel 46a auf einer dem Werkzeugfutter 36a abgewandten Seite eine Verzahnung 76a auf. Die Führungskurven 66a, 68a weisen jeweils einen Schlagfreilaufbereich 78a, 80a, einen Schlagaufzugsbereich 82a, 84a und eine Montageaussparung 86a, 88a auf. Bei einer Montage werden die Verbindungsmittel 70a, 72a durch die Montageaussparungen 86a, 88a in die Befestigungsaussparungen 74a des Schlägers 44a eingebracht. Die Schlagwerkspindel 46a rotiert bei dem Schlagbohrbetrieb in Schlagrichtung 54a gesehen im Uhrzeigersinn. Die Schlagaufzugsbereiche 82a, 84a sind spiralförmig ausgebildet. Sie erstrecken sich um 180 Grad um eine Rotationsachse 90a der Schlagwerkspindel 46a. Die Schlagaufzugsbereiche 82a, 84a bewegen die Verbindungsmittel 70a, 72a und damit den Schläger 44a bei dem Schlagbohrbetrieb entgegen der Schlagrichtung 54a. Somit weist das Schlagwerk 22a die Verbindungsmittel 70a, 72a auf, welche in zumindest einem Betriebszustand eine Bewegung von der Schlagwerkspindel 46a auf den Schläger 44a übertragen.

Die Schlagfreilaufbereiche 78a, 80a verbinden je zwei Enden 92a, 94a, 96a, 98a der Schlagaufzugsbereiche 82a, 84a. Die Schlagfreilaufbereiche 78a, 80a erstrecken sich um 180 Grad um eine Rotationsachse 90a der Schlagwerkspindel 46a. Die Schlagfreilaufbereiche 78a, 80a weisen je eine Schlagflanke 100a, 102a auf, die, von einem dem Planetengetriebe 28a zugewandten Ende 94a, 96a des Schlagaufzugsbereichs 82a ausgehend, in etwa parallel zu der Schlagrichtung 54a verläuft. Nachdem die Verbindungsmittel 70a, 72a in die Schlagfreilaufbereiche 78a, 80a eindringen, beschleunigt die Schlagwerkfeder 48a den Schläger 44a und die Verbindungsmittel 70a, 72a in Schlagrichtung 54a. Dabei bewegen sich die Verbindungsmittel 70a, 72a durch die Schlagfreilaufbereiche 78a, 80a, ohne eine axiale Kraft zu erfahren, bis der Schläger 44a auf die Schlagfläche 42a trifft. Die Kurvenführungen 62a, 64a sind um 180 Grad um die Rotationsachse 90a versetzt angeordnet. Die Kurvenführungen 62a, 64a sind in axialer Richtung hintereinander angeordnet.

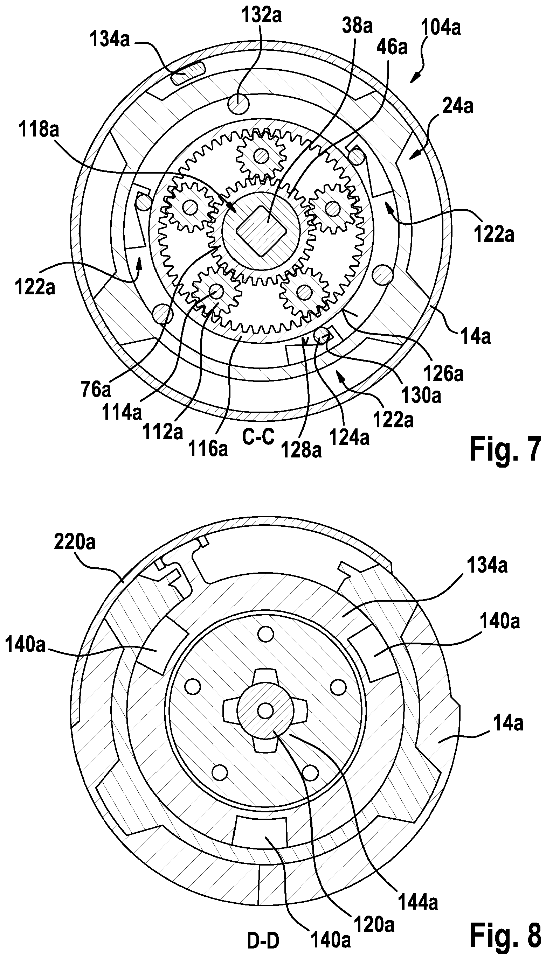

Das Planetengetriebe 28a weist die erste Planetengetriebestufe 104a, eine zweite Planetengetriebestufe 106a, eine dritte Planetengetriebestufe 108a und eine vierte Planetengetriebestufe 110a auf. Figur 7 zeigt eine Schnittfläche C der ersten Planetengetriebestufe 104a. Die in den Figuren 7, 12, 13 und 15 dargestellten Planetengetriebestufen 104a, 106a, 108a, 110a weisen Zahnräder mit einer, dem Fachmann als sinnvoll erscheinenden Anzahl von Zähnen auf. Die Zahnräder der Planetengetriebestufen 104a, 106a, 108a, 110a stehen miteinander in Eingriff, was hier teilweise so nicht dargestellt ist. Die erste Planetengetriebestufe 104a erhöht eine erste Rotationsgeschwindigkeit der zweiten Planetengetriebestufe 106a zum Antreiben des Schlagwerks 22a. Die zweite Planetengetriebestufe 106a treibt mit dieser ersten Rotationsgeschwindigkeit die Werkzeugspindel 38a an. Die Verzahnung 76a der Schlagwerkspindel 46a bildet ein Sonnenrad der ersten Planetengetriebestufe 104a. Die Verzahnung 76a kämmt mit Planetenrädern 112a der ersten Planetengetriebestufe 104a, die von einem Planetenträger 114a der ersten Planetengetriebestufe 104a geführt werden. Ein Hohlrad 116a der ersten Planetengetriebestufe 104a kämmt mit den Planetenrädern 112a der ersten Planetengetriebestufe 104a.

Die erste Schlagabschaltvorrichtung 24a fixiert bei einem Schlagbohrbetrieb das Hohlrad 116a der ersten Planetengetriebestufe 104a relativ zu dem Handwerkzeuggehäuse 14a unbeweglich. Die erste Schlagabschaltvorrichtung 24a ist dazu vorgesehen, die Schlägerantriebsvorrichtung 50a bei einer ersten, rechtslaufenden Bohrrotationsrichtung einzuschalten und die Schlägerantriebsvorrichtung 50a bei einer zweiten, linkslaufenden Bohrrotationsrichtung selbstständig abzuschalten. Die erste Schlagabschaltvorrichtung 24a wirkt auf das Hohlrad 116a der ersten Planetengetriebestufe 104a. Die erste Schlagabschaltvorrichtung 24a blockiert das Hohlrad 116a der ersten Planetengetriebestufe 104a bei der ersten, rechtslaufenden Bohrrotationsrichtung. Die erste Schlagabschaltvorrichtung 24a gibt das Hohlrad 116a der ersten Planetengetriebestufe 104a bei der zweiten, linkslaufenden Bohrrotationsrichtung frei, so dass es sich drehen kann. Dazu weist die erste Schlagabschaltvorrichtung 24a drei Klemmmechanismen 122a auf. Die Klemmmechanismen 122a umfassen jeweils ein Blockiermittel 124a, eine erste Klemmfläche 126a, eine zweite Klemmfläche 128a und Freilaufflächen 130a. Das Blockiermittel 124a ist als eine Walze ausgebildet. Die erste Klemmfläche 126a bildet einen außenliegenden Bereich einer Oberfläche des Hohlrads 116a der ersten Planetengetriebestufe 104a. Die zweite Klemmfläche 128a ist relativ zu dem Handwerkzeuggehäuse 14a unbeweglich angeordnet. Bei einem Betrieb in der ersten, rechtslaufenden Bohrrotationsrichtung klemmen die Blockiermittel 124a zwischen den ersten Klemmflächen 126a und der zweiten Klemmfläche 128a. Bei einem Betrieb in der zweiten, linkslaufenden Bohrrotationsrichtung führen die Freilaufflächen 130a die Blockiermittel 124a und verhindern ein Verklemmen.

Des Weiteren zeigt die Figur 7 ein Verbindungsmittel 118a, das die Werkzeugspindel 38a und einen Planetenträger 120a der zweiten Planetengetriebestufe 106a drehfest verbindet. Das Verbindungsmittel 118a verbindet die Werkzeugspindel 38a und den Planetenträger 120a der zweiten Planetengetriebestufe 106a in diesem Fall axial verschiebbar.

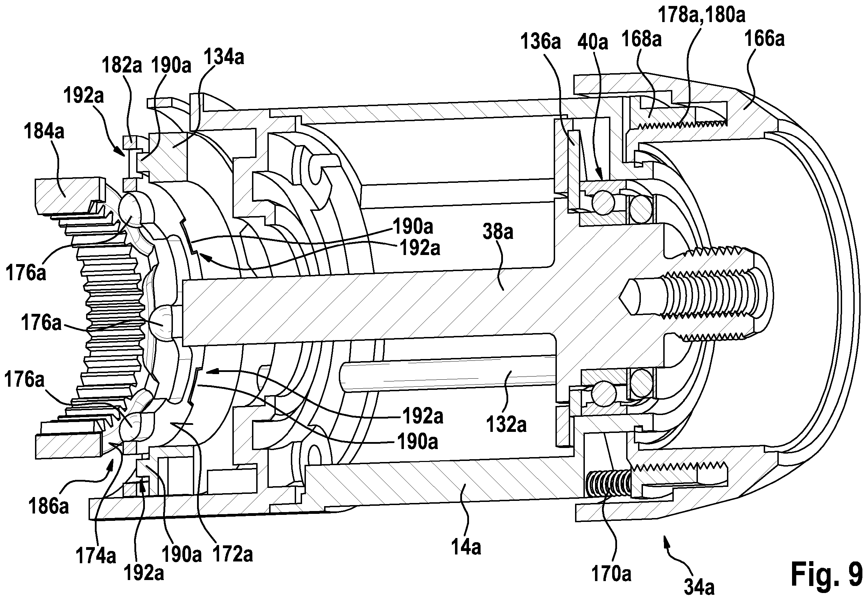

Ferner zeigen die Figuren 3, 4 und 7 drei erste Übertragungsmittel 132a der zweiten Schlagabschaltvorrichtung 26a. Die Übertragungsmittel 132a sind als Stäbe ausgebildet. Figur 8 zeigt eine Schnittfläche D durch ein Steuerelement 134a der Handwerkzeugvorrichtung 12a. Figur 9 zeigt die zweite Schlagabschaltvorrichtung 26a in einer perspektivischen Schnittdarstellung. Das Steuerelement 134a stützt die Werkzeugführungseinheit 20a in einem in den Figuren 1, 8 und 9, dargestellten Schraubmodus und in einem Bohrmodus in einer Richtung entgegen der Schlagrichtung 54a ab. Eine auf die Werkzeugführungseinheit 20a aufgebrachte Kraft wirkt über das Lagermittel 40a, ein zweites Übertragungsmittel 136a der zweiten Schlagabschaltvorrichtung 26a und die ersten Übertragungsmittel 132a auf Stützflächen 138a des Steuerelements 134a. Das Steuerelement 134a weist drei Aussparungen 140a auf. In einem in der Figur 2 dargestellten Schlagbohrmodus können die ersten Übertragungsmittel 132a in die Aussparungen 140a eingeschoben werden, wodurch die Werkzeugführungseinheit 20a axial bewegbar ist.

Die zweite Schlagabschaltvorrichtung 26a weist eine Schlagabschaltkupplung 142a auf. Die Schlagabschaltkupplung 142a ist teilweise einstückig mit dem Planetengetriebe 28a ausgebildet. Die Schlagabschaltkupplung 142a ist zwischen der ersten Planetengetriebestufe 104a und der zweiten Planetengetriebestufe 106a angeordnet. Die Schlagabschaltkupplung 142a weist ein erstes Kupplungselement 144a auf, das drehfest mit einem Planetenträger 114a der ersten Planetengetriebestufe 104a verbunden ist. Die Schlagabschaltkupplung 142a weist ein zweites Kupplungselement 146a auf, das drehfest mit einem Planetenträger 120a der zweiten Planetengetriebestufe 106a verbunden ist. In dem dargestellten Schraubmodus und dem Bohrmodus ist die Schlagabschaltkupplung 142a geöffnet. Bei einem Schlagbohrvorgang überträgt die Werkzeugspindel 38a eine axiale Kupplungskraft auf die Schlagabschaltkupplung 142a, wenn der Bediener ein Einsatzwerkzeug gegen ein Werkstück drückt. Die Kupplungskraft schließt die Schlagabschaltkupplung 142a. In der Figur 2 ist die Schlagabschaltkupplung 142a geschlossen dargestellt. Wenn der Bediener das Einsatzwerkzeug von dem Werkstück absetzt, öffnet eine Schlagschaltfeder 148a der Handwerkzeugvorrichtung 12a die Schlagabschaltkupplung 142a.

Der Planetenträger 120a der zweiten Planetengetriebestufe 106a ist zweiteilig ausgebildet. Ein erstes Teil 150a des Planetenträgers 120a der zweiten Planetengetriebestufe 106a ist drehfest mit der Werkzeugspindel 38a verbunden. Das erste Teil 150a des Planetenträgers 120a ist axial verschiebbar mit der Werkzeugspindel 38a verbunden, wodurch der Planetenträgers 120a auch bei einem Schlag mit der Werkzeugspindel 38a drehgekoppelt bleibt. Somit ist das erste Teil 150a permanent mit der Werkzeugspindel 38a verbunden. Das erste Teil 150a des Planetenträgers 120a ist gegen die Schlagschaltfeder 148a axial verschiebbar gelagert. Ein zweites Teil 152a des Planetenträgers 120a der zweiten Planetengetriebestufe 106a ist drehfest mit dem ersten Teil 150a des Planetenträgers 120a verbunden. Das erste Teil 150a und das zweite Teil 152a des Planetenträgers 120a sind zueinander axial verschiebbar verbunden. Das erste Teil 150a und das zweite Teil 152a des Planetenträgers 120a sind permanent drehfest verbunden.

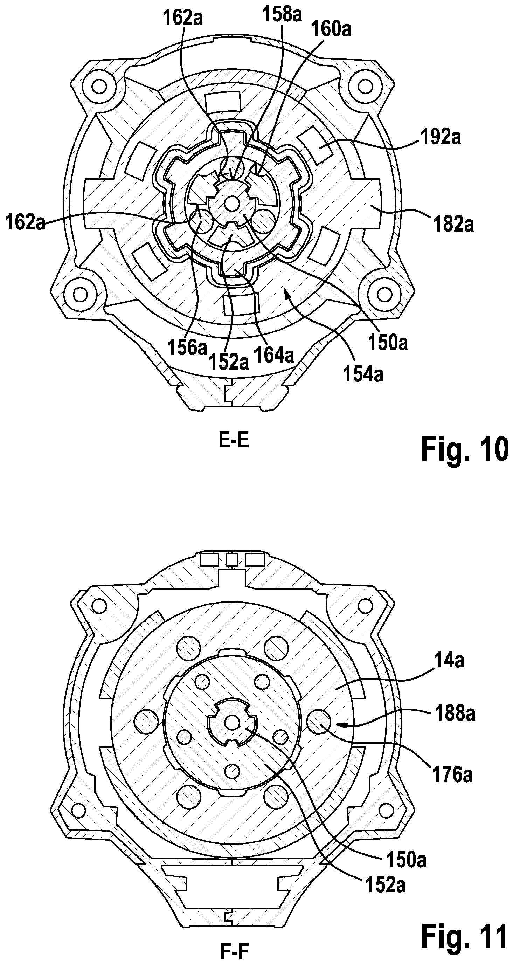

Figur 10 zeigt eine Schnittfläche einer Spindelblockiervorrichtung 154a der Handwerkzeugvorrichtung 12a. Die Spindelblockiervorrichtung 154a ist dazu vorgesehen, die Werkzeugspindel 38a drehfest mit dem Handwerkzeuggehäuse 14a zu verbinden, wenn ein Werkzeugdrehmoment auf das Werkzeugfutter 36a aufgebracht wird, beispielsweise bei einem Einspannen eines Einsatzwerkzeugs in das Werkzeugfutter 36a. Die Spindelblockiervorrichtung 154a ist teilweise einstückig mit dem Planetenträger 120a der zweiten Planetengetriebestufe 106a ausgebildet. Die Spindelblockiervorrichtung 154a weist Blockiermittel 156a, erste Klemmflächen 158a, eine zweite Klemmfläche 160a und Freilaufflächen 162a auf. Die Blockiermittel 156a sind walzenförmig ausgebildet. Die ersten Klemmflächen 158a sind als Bereiche einer Oberfläche des ersten Teils 150a des Planetenträgers 120a der zweiten Planetengetriebestufe 106a ausgebildet. Die ersten Klemmflächen 158a sind eben ausgebildet. Die zweite Klemmfläche 160a ist als eine Innenseite eines Klemmrings 164a der Spindelblockiervorrichtung 154a ausgebildet. Der Klemmring 164a ist drehfest mit dem Handwerkzeuggehäuse 14a verbunden. Die Freilaufflächen 162a sind als Bereiche einer Oberfläche des zweiten Teils 152a des Planetenträgers 120a der zweiten Planetengetriebestufe 106a ausgebildet. Wenn ein Werkzeugdrehmoment auf das Werkzeugfutter 36a aufgebracht wird, klemmen die Blockiermittel 156a zwischen den ersten Klemmflächen 158a und der zweiten Klemmfläche 160a. Wenn die Antriebseinheit 30a antreibt, führen die Freilaufflächen 162a die Blockiermittel 156a auf einer Kreisbahn und verhindern ein Klemmen. Das erste Teil 150a und das zweite Teil 152a des Planetenträgers 120a sind mit Spiel miteinander verzahnt.

Die Figuren 1, 2, 9 und 10 zeigen die Drehmomentbegrenzungseinheit 34a. Die Drehmomentbegrenzungseinheit 34a ist dazu vorgesehen, in einem Schraubmodus ein von dem Werkzeugfutter 36a maximal abgegebenes Werkzeugdrehmoment zu begrenzen. Die Drehmomentbegrenzungseinheit 34a umfasst ein Bedienelement 166a, ein Verstellelement 168a, Begrenzungsfedern 170a, nicht näher dargestellte Übertragungsmittel, erste Anschlagsflächen 172a, eine zweite Anschlagsfläche 174a und Begrenzungsmittel 176a. Das Bedienelement 166a ist ringförmig ausgebildet. Es schließt sich in Richtung des Planetengetriebes 28a an das Werkzeugfutter 36a an. Das Bedienelement 166a weist ein Einstellgewinde 178a auf, das mit einem Einstellgewinde 180a der Verstellelement 168a gekoppelt ist. Das Verstellelement 168a ist drehfest und axial verschiebbar gelagert. Eine Drehung des Bedienelements 166a verschiebt das Verstellelement 168a in axialer Richtung. Die Begrenzungsfedern 170a sind auf einer Seite an dem Verstellelement 168a abgestützt. Die Begrenzungsfedern 170a sind auf einer anderen Seite über die Übertragungsmittel an einem Anschlagsmittel 182a der Drehmomentbegrenzungseinheit 34a abgestützt. Eine Oberfläche des Anschlagsmittels 182a weist die erste Anschlagsflächen 172a auf. Das Anschlagsmittel 182a ist in dem Schraubmodus in axialer Richtung gegen die Begrenzungsfedern 170a bewegbar gelagert. Die zweite Anschlagsfläche 174a ist als ein Bereich einer Oberfläche eines Hohlrads 184a der zweite Planetengetriebestufe 106a ausgebildet. Die zweite Anschlagsfläche 174a weist muldenförmige Vertiefungen 186a auf. Die Begrenzungsmittel 176a sind kugelförmig ausgebildet. Die Begrenzungsmittel 176a sind in röhrenförmigen Aussparungen 188a in Schlagrichtung 54a verschiebbar gelagert. Figur 11 zeigt eine Schnittfläche F der Drehmomentbegrenzungseinheit 34a. Bei einem Schraubvorgang sind die Begrenzungsmittel 176a in den muldenförmigen Vertiefungen 186a angeordnet. Die Begrenzungsmittel 176a befestigen dabei das Hohlrad 184a der zweiten Planetengetriebestufe 106a drehfest. Bei Erreichen des eingestellten maximalen Werkzeugdrehmoments drücken die Begrenzungsmittel 176a das Anschlagsmittel 182a gegen die Begrenzungsfedern 170a weg. Dann springen die Begrenzungsmittel 176a jeweils in eine nächste der muldenförmigen Vertiefungen 186a. Dabei dreht sich das Hohlrad 184a der zweiten Planetengetriebestufe 106a, wodurch der Schraubvorgang unterbrochen wird.

Das Steuerelement 134a der Handwerkzeugvorrichtung 12a weist Abstützmittel 190a auf, die zumindest bei einem Bohrbetrieb eine axiale Bewegung des Anschlagsmittel 182a verhindern. Dazu stützen die Abstützmittel 190a das Anschlagsmittel 182a in axialer Richtung ab. Das Anschlagsmittel 182a weist Schraubaussparungen 192a auf, in die die Anschlagsmittel 182a bei einem insbesondere in der Figur 9 dargestellten Schraubbetrieb bei Erreichen des maximalen Werkzeugdrehmoments eintauchen. Die Abstützmittel 190a sind bei einer Schraubstellung des Steuerelements 134a dementsprechend angeordnet. Bei einem Schlagbohrbetrieb verhindern die Abstützmittel 190a ebenfalls eine axiale Bewegung des Anschlagsmittel 182a und damit ein Ansprechen der Drehmomentbegrenzungseinheit 34a. Alternativ könnten Anschlagsmittel bei einem Schlagbohrbetrieb ebenfalls so angeordnet sein, dass sie in Schraubaussparungen eintauchen können. Somit wäre eine Drehmomentbegrenzungseinheit im Schlagbohrbetrieb aktiv.

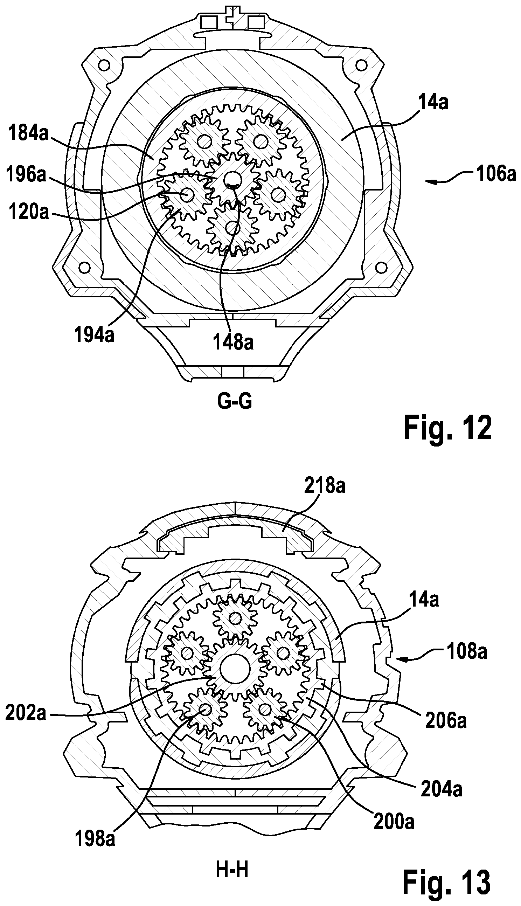

Figur 12 zeigt eine Schnittfläche G der zweite Planetengetriebestufe 106a. Das Hohlrad 184a der zweiten Planetengetriebestufe 106a ist zumindest bei einem Bohrbetrieb gegen eine vollständige Drehung gesichert in dem Handwerkzeuggehäuse 14a gelagert. Planetenräder 194a der zweiten Planetengetriebestufe 106a kämmen mit dem Hohlrad 184a und einem Sonnenrad 196a der zweiten Planetengetriebestufe 106a.

Figur 13 zeigt eine Schnittfläche H der dritten Planetengetriebestufe 108a. Das Sonnenrad 196a der zweite Planetengetriebestufe 106a ist drehfest mit einem Planetenträger 198a der dritten Planetengetriebestufe 108a verbunden. Planetenräder 200a der dritten Planetengetriebestufe 108a kämmen mit einem Sonnenrad 202a und einem Hohlrad 204a der dritten Planetengetriebestufe 108a. Das Hohlrad 204a der dritten Planetengetriebestufe 108a weist eine Verzahnung 206a auf, die das Hohlrad 204a der dritten Planetengetriebestufe 108a in einer ersten Übersetzung drehfest mit dem Handwerkzeuggehäuse 14a verbindet.

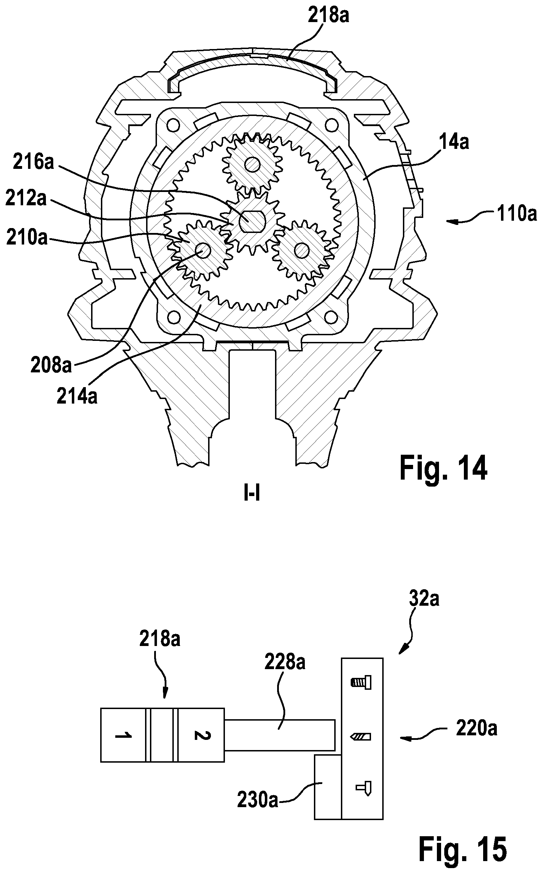

Figur 14 zeigt eine Schnittfläche I der dritten Planetengetriebestufe 108a. Das Sonnenrad 202a der dritten Planetengetriebestufe 108a ist drehfest mit einem Planetenträger 208a der vierten Planetengetriebestufe 110a verbunden. Planetenräder 210a der vierten Planetengetriebestufe 110a kämmen mit einem Sonnenrad 212a und einem Hohlrad 214a der vierten Planetengetriebestufe 110a. Das Hohlrad 214a ist drehfest mit dem Handwerkzeuggehäuse 14a verbunden. Das Sonnenrad 212a der vierten Planetengetriebestufe 110a ist drehfest mit einem Rotor 216a der Antriebseinheit 30a verbunden.

Das Hohlrad 204a der dritten Planetengetriebestufe 108a ist wie in Figur 2 gezeigt in axialer Richtung verschiebbar gelagert. In der ersten Übersetzung ist das Hohlrad 204a der dritten Planetengetriebestufe 108a drehfest mit dem Handwerkzeuggehäuse 14a verbunden. In der zweiten Übersetzung ist das Hohlrad 204a der dritten Planetengetriebestufe 108a drehfest mit dem Planententräger 208a der vierten Planetengetriebestufe 110a verbunden und relativ zu dem Handwerkzeuggehäuse 14a drehbar gelagert. Somit ergibt sich ein Untersetzungsverhältnis der ersten Übersetzung zwischen dem Rotor 216a der Antriebseinheit 30a und dem Planetenträger 198a der dritten Planetengetriebestufe 108a, das größer ist als ein Untersetzungsverhältnis der zweiten Übersetzung.

Die Bedienvorrichtung 32a weist ein erstes Bedienelement 218a und ein zweites Bedienelement 220a auf. Das erste Bedienelement 218a ist auf einer dem Handgriff 18a abgewandten Seite des Handwerkzeuggehäuses 14a angeordnet. Es ist parallel zur axialen Richtung des Planetengetriebes 28a bewegbar gelagert. Das erstes Bedienelement 218a ist über ein Verstellmittel 222a der Bedienvorrichtung 32a in axialer Richtung mit dem Hohlrad 204a der dritten Planetengetriebestufe 108a verbunden. Das Hohlrad 204a der dritten Planetengetriebestufe 108a weist eine Nut 224a auf, in die das Verstellmittel 222a eingreift. Somit ist das Hohlrad 204a der dritten Planetengetriebestufe 108a mit dem Verstellmittel 222a, relativ zu dem Verstellmittel 222a axial drehbar, in axialer Richtung verbunden. Das Verstellmittel 222a ist federnd ausgebildet, wodurch die Übersetzung von einer Drehstellung des Hohlrad 204a der dritten Planetengetriebestufe 108a unabhängig verstellt werden kann. Wenn das erste Bedienelement 218a in Richtung des Werkzeugfutters 36a geschoben ist, ist die erste Übersetzung eingestellt. Wenn das zweite Bedienelement 220a von dem Werkzeugfutter 36a weggeschoben ist, ist die zweite Übersetzung eingestellt.

Das zweite Bedienelement 220a ist auf einer dem Handgriff 18a abgewandten Seite des Handwerkzeuggehäuses 14a angeordnet. Das zweite Bedienelement 220a ist um eine Achse verschiebbar angeordnet, die parallel zu der axialen Richtung des Planetengetriebes 28a ausgerichtet ist. Das zweite Bedienelement 220a ist drehfest mit dem Steuerelement 134a der Handwerkzeugvorrichtung 12a verbunden. Mittels des zweiten Bedienelements 220a sind der Schraubmodus, der Bohrmodus und der Schlagbohrmodus einstellbar. Wenn das zweite Bedienelement 220a in Schlagrichtung 54a gesehen nach links geschoben ist, ist der Schlagbohrmodus eingestellt. Wenn das zweite Bedienelement 220a in Schlagrichtung 54a gesehen nach rechts geschoben ist, ist der Schraubmodus eingestellt. Wenn das zweite Bedienelement 220a in Schlagrichtung 54a gesehen mittig angeordnet ist, ist der Bohrmodus eingestellt.

Figur 15 zeigt schematisch eine Schutzvorrichtung 226a der Handwerkzeugvorrichtung 12a, die in dem Schlagbohrmodus einen Betrieb in der ersten Übersetzung verhindert. In Figur 15 sind die erste Übersetzung und der Bohrmodus eingestellt. Die Schutzvorrichtung 226a ist teilweise einstückig mit der Bedienvorrichtung 32a ausgebildet. An das erste Bedienelement 218a ist ein erstes Sperrmittel 228a der Schutzvorrichtung 226a angeformt. An das zweite Bedienelement 220a ist ein zweites Sperrmittel 230a der Schutzvorrichtung 226a angeformt. Die Sperrmittel 228a sind jeweils zungenförmig ausgebildet. Das erste Sperrmittel 228a erstreckt sich in Richtung des zweiten Bedienelements 220a. Das zweite Sperrmittel 230a erstreckt sich in Richtung des ersten Bedienelements 218a. Die Schutzvorrichtung 226a verhindert ein Umschalten in den Schlagbohrmodus, wenn die erste Übersetzung eingestellt ist. Die Schutzvorrichtung 226a verhindert ein Umschalten in die erste Übersetzung, wenn der Schlagbohrmodus eingestellt ist.

Die Antriebseinheit 30a ist als ein Elektromotor ausgebildet. Die Antriebseinheit 30a weist ein maximales Drehmoment auf, das ein maximales Werkzeugdrehmoment in der ersten Übersetzung von mehr als 15 Nm und in der zweiten Übersetzung von weniger als 15 m verursacht. Das maximale Werkzeugdrehmoment in der ersten Übersetzung beträgt 30 Nm. Das maximale Werkzeugdrehmoment in der zweiten Übersetzung beträgt 10 Nm. Das Werkzeugdrehmoment ist dabei nach der Norm DIN EN 60745 zu bestimmen.

Die Schlagschaltfeder 148a der Handwerkzeugvorrichtung 12a öffnet bei einem Schlagbohrbetrieb die Schlagabschaltkupplung 142a, wenn der Bediener das Einsatzwerkzeug von dem Werkstück absetzt. Die Schlagschaltfeder 148a ist koaxial zu den Planetengetriebestufen 104a, 106a, 108a, 110a des Planetengetriebes 28a angeordnet. Die zweite Planetengetriebestufe 106a und die dritte Planetengetriebestufe 108a umschließen die Schlagschaltfeder 148a jeweils auf zumindest einer Ebene, die senkrecht zu der axialen Richtung des Planetengetriebes 28a ausgerichtet ist. Die zweite Planetengetriebestufe 106a und die dritte Planetengetriebestufe 108a sind jeweils wirkungsmäßig zwischen zumindest zwei weiteren Planetengetriebestufen 104a, 106a, 108a, 110a des Planetengetriebes 28a angeordnet. Der Planetenträger 120a der zweiten Planetengetriebestufe 106a stützt die Schlagschaltfeder 148a auf einer dem Werkzeugfutter 36a abgewandten Seite ab.

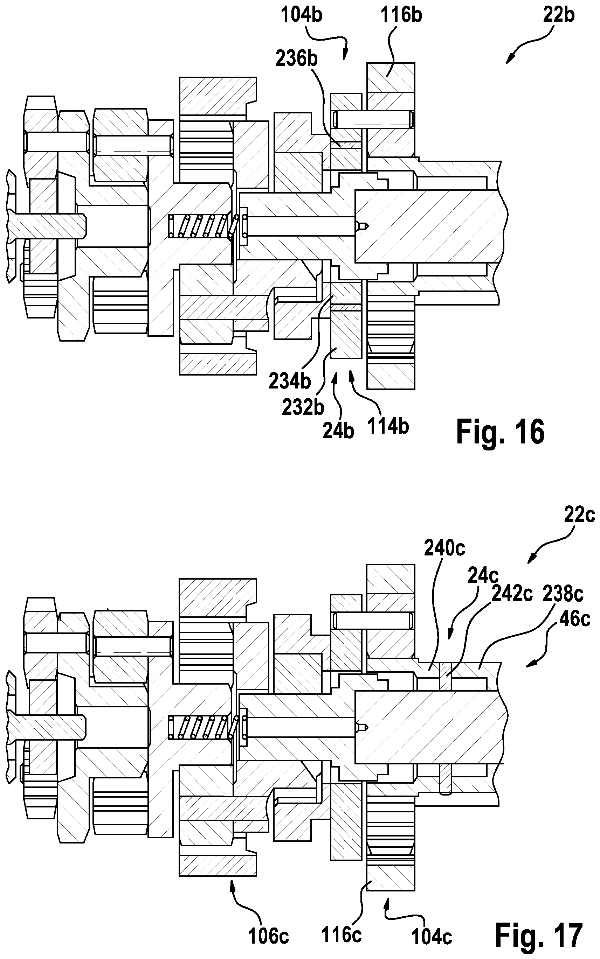

In den Figuren 16 bis 19 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 15, verwiesen werden kann. Zur Unterscheidung der Ausführungsbeispiele ist der Buchstabe a den Bezugszeichen des Ausführungsbeispiels in den Figuren 1 bis 15 nachgestellt. In den Ausführungsbeispielen der Figuren 16 bis 19 ist der Buchstabe a durch die Buchstaben b bis e ersetzt.

In der Figur 16 ist ein weiteres, alternatives Ausführungsbeispiel einer ersten Schlagabschaltvorrichtung 24b schematisch dargestellt. Ein Planetenträger 114b einer ersten Planetengetriebestufe 104b ist zweiteilig ausgebildet. Ein erstes Teil 232b des Planetenträgers 114b führt Planetenräder 112b der ersten Planetengetriebestufe 104b. Ein zweites Teil 234b des Planetenträger 114b ist mit einer zweiten Planetengetriebestufe 106b drehgekoppelt. Eine erste Schlagabschaltvorrichtung 24b eines Schlagwerks 22b weist einen, dem Fachmann als sinnvoll erscheinenden Freilauf 236b auf, der das erste Teil 232b und das zweite Teil 234b des Planetenträgers 114b bei einer rechtslaufenden Bohrrotationsrichtung drehfest verbindet und bei einer linkslaufenden Bohrrotationsrichtung trennt. Ein Hohlrad 116b der ersten Planetengetriebestufe 104b ist dauerhaft drehfest mit einem Handwerkzeuggehäuse verbunden.

In der Figur 17 ist ein nächstes Ausführungsbeispiel einer ersten Schlagabschaltvorrichtung 24c schematisch dargestellt. Eine Schlagwerkspindel 46c eines Schlagwerks 22c ist zweiteilig ausgebildet. Ein erstes Teil 238c der Schlagwerkspindel 46c ist mit einer Schlägerantriebsvorrichtung verbunden. Ein zweites Teil 240c der Schlagwerkspindel 46c ist mit einer zweiten Planetengetriebestufe 106c verbunden. Die erste Schlagabschaltvorrichtung 24c weist einen, dem Fachmann als sinnvoll erscheinenden Freilauf 242c auf, der das erste Teil 238b und das zweite Teil 240c der Schlagwerkspindel 46c bei einer rechtslaufenden Bohrrotationsrichtung drehfest verbindet und bei einer linkslaufenden Bohrrotationsrichtung trennt. Ein Hohlrad 116c der ersten Planetengetriebestufe 104c ist dauerhaft drehfest mit einem Handwerkzeuggehäuse verbunden.

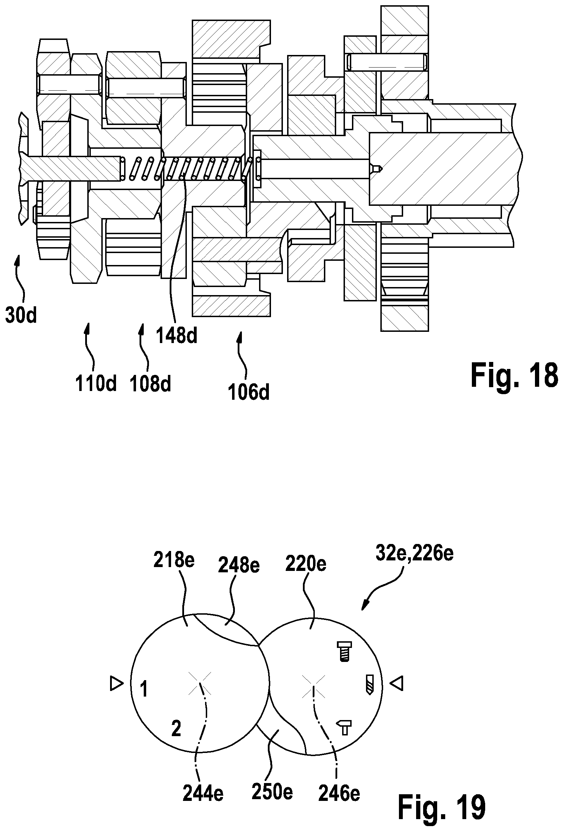

In der Figur 18 ist ein weiteres Ausführungsbeispiel einer Schlagschaltfeder 148d dargestellt. Eine zweite Planetengetriebestufe 106d stützt die Schlagschaltfeder 148d auf einer einem Werkzeugfutter zugewandten Seite ab. Eine Antriebseinheit 30d stützt die Schlagschaltfeder 148d auf einer einem Werkzeugfutter abgewandten Seite ab. Die zweite Planetengetriebestufe 106d, eine dritte Planetengetriebestufe 108d und eine vierte Planetengetriebestufe 110d umschließen die Schlagschaltfeder 148d jeweils auf zumindest einer Ebene, die senkrecht zu einer axialen Richtung der Planetengetriebestufen 106d, 108d, 110d ausgerichtet ist. Die Antriebseinheit 30d ist drehfest mit einem Teil der Planetengetriebestufe 110d verbunden.

Figur 19 zeigt ein alternatives Ausführungsbeispiel der Bedienvorrichtung 32e und einer Schutzvorrichtung 226e. Die Bedienvorrichtung 32e weist ein erstes Bedienelement 218e und ein zweites Bedienelement 220e auf. Die Bedienelemente 218e, 220e sind um Drehachsen 244e, 246e schwenkbar gelagert. Die Bedienelemente 218e, 220e weisen eine scheibenförmige Grundform auf. Das erste Bedienelement 218e ist, nicht näher dargestellt, über einen, dem Fachmann als sinnvoll erscheinenden Mechanismus mit einem Planetengetriebe verbunden. Mittels des ersten Bedienelements 218e sind eine erste Übersetzung und eine zweite Übersetzung einstellbar. Das zweite Bedienelement 220e ist, nicht näher dargestellt, über einen, dem Fachmann als sinnvoll erscheinenden Mechanismus mit einem Steuerelement verbunden. Mittels des zweiten Bedienelements 220e sind ein Schraubmodus, ein Bohrmodus und ein Schlagbohrmodus einstellbar. Des Weiteren könnte ein Meißelmodus einstellbar sein.

Die Schutzvorrichtung 226e weist einen von dem ersten Bedienelement 218e begrenzten Freilaufbereich 248e auf. Die Schutzvorrichtung 226e weist einen von dem zweiten Bedienelement 220e begrenzten Freilaufbereich 250e auf. Der Freilaufbereich 248e des ersten Bedienelements 218e ermöglicht ein Einstellen des Schraubmodus, des Bohrmodus und des Schlagbohrmodus, wenn eine zweite Übersetzung eingestellt ist. Der Freilaufbereich 250e des zweiten Bedienelement 220e ermöglicht ein Einstellen des Schraubmodus und des Bohrmodus, wenn eine erste Übersetzung eingestellt ist. In dem Schlagbohrmodus verhindert die Schutzvorrichtung 226e ein Einstellen der ersten Übersetzung. Bei eingestellter erster Übersetzung verhindert die Schutzvorrichtung 226e ein Einstellen des Schlagbohrmodus.

## Patentansprüche

1. Handwerkzeugvorrichtung mit einem Schläger (44a) und einer Schlagwerkfeder (48a), welche den Schläger (44a) vor einem Schlag in eine parallel zu einer axialen Richtung einer Schlagwerkspindel (46a) ausgerichteten Schlagrichtung (54a) beschleunigt, sowie mit zumindest einer Bedienvorrichtung (32a), wobei die Bedienvorrichtung (32a) ein erstes Bedienelement (218a) aufweist, über das eine erste Übersetzung und eine zweite Übersetzung einstellbar sind, und ein zweites Bedienelement (220a) aufweist, über das zumindest ein Schraubmodus, ein Bohrmodus und ein Schlagbohrmodus einstellbar ist, und mit einer Schutzvorrichtung (226a), die in dem Schlagbohrmodus einen Betrieb in der ersten Übersetzung verhindert, **dadurch gekennzeichnet, dass** die Schutzvorrichtung (226a) zumindest teilweise einstückig mit der Bedienvorrichtung (32a) ausgebildet ist, wobei an das erste Bedienelement (218a) ein erstes Sperrmittel (228a) der Schutzvorrichtung (226a) angeformt ist und an das zweite Bedienelement (220a) ein zweites Sperrmittel (230a) der Schutzvorrichtung (226a) angeformt ist, und die Sperrmittel (228a, 230a) zungenförmig ausgebildet sind, wobei sich das erste Sperrmittel (228a) in Richtung des zweiten Bedienelements (220a) erstreckt und sich das zweite Sperrmittel (230a) in Richtung des ersten Bedienelements (218a) erstreckt und das erste Sperrmittel und das zweite Sperrmittel derart zusammenwirken, dass die Schutzvorrichtung (226a) ein Umschalten in den Schlagbohrmodus verhindert, wenn die erste Übersetzung eingestellt ist, und ein Umschalten in die erste Übersetzung verhindert, wenn der Schlagbohrmodus eingestellt ist.

2. Handwerkzeugvorrichtung nach Anspruch 1, **dadurch gekennzeichnet, dass** ein maximales Werkzeugdrehmoment in der ersten Übersetzung mehr als 15 Nm beträgt.

3. Handwerkzeugvorrichtung nach einem der vorhergehenden Ansprüche, **dadurch gekennzeichnet, dass** ein maximales Werkzeugdrehmoment in der zweiten Übersetzung weniger als 15 Nm beträgt.

4. Handwerkzeugvorrichtung nach einem der vorhergehenden Ansprüche, **gekennzeichnet durch** eine einstellbare Drehmomentbegrenzungseinheit (34a), die dazu vorgesehen ist, ein maximales Werkzeugdrehmoment in einem Schraubmodus zu begrenzen.

5. Handwerkzeugvorrichtung nach einem der vorhergehenden Ansprüche, **dadurch gekennzeichnet, dass** die Bedienvorrichtung (32a) dazu vorgesehen ist, die Drehmomentbegrenzungseinheit (34a) in dem Bohrmodus zu deaktivieren.

6. Handwerkzeug mit einer Handwerkzeugvorrichtung (12a) nach einem der vorhergehenden Ansprüche.

## Claims

1. Hand tool device having a striker (44a) and a percussion-mechanism spring (48a) that accelerates the striker (44a) before a strike in a striking direction (54a) oriented parallel to an axial direction of a percussion-mechanism spindle (46a), and having at least one operating device (32a), wherein the operating device (32a) has a first operating element (218a), via which a first gear ratio and a second gear ratio are settable, and a second operating element (220a), via which at least a screwing mode, a drilling mode and a percussion drilling mode are settable, and having a protective device (226a), which prevents operation in the first gear ratio in the percussion drilling mode, **characterized in that** the protective device (226a) is formed at least partially in one piece with the operating device (32a), wherein a first blocking means (228a) of the protective device (226a) is integrally formed on the first operating element (218a) and a second blocking means (230a) of the protective device (226a) is integrally formed on the second operating element (220a), and the blocking means (228a, 230a) are configured in a tongue-like manner, wherein the first blocking means (228a) extends in the direction of the second operating element (220a) and the second blocking means (230a) extends in the direction of the first operating element (218a) and the first blocking means and the second blocking means cooperate such that the protective device (226a) prevents a switchover into the percussion drilling mode when the first gear ratio has been set, and prevents a switchover into the first gear ratio when the percussion drilling mode has been set.

2. Hand tool device according to Claim 1, **characterized in that** a maximum tool torque in the first gear ratio is more than 15 Nm.

3. Hand tool device according to either of the preceding claims, **characterized in that** a maximum tool torque in the second gear ratio is less than 15 Nm.

4. Hand tool device according to one of the preceding claims, **characterized by** a settable torque limiting unit (34a), which is intended to limit a maximum tool torque in a screwing mode.

5. Hand tool device according to one of the preceding claims, **characterized in that** the operating device (32a) is intended to deactivate the torque limiting unit (34a) in the drilling mode.

6. Hand tool having a hand tool device (12a) according to one of the preceding claims.

## Revendications

1. Dispositif d'outil manuel comprenant un percuteur (44a) et un ressort de mécanisme de percussion (48a) qui accélère le percuteur (44a) avant un impact dans une direction d'impact (54a) orientée en parallèle à une direction axiale d'une broche de mécanisme de percussion (46a), et comprenant au moins un dispositif de commande (32a), le dispositif de commande (32a) présentant un premier élément de commande (218a) qui permet de régler un premier rapport de transmission et un deuxième rapport de transmission, et un deuxième dispositif de commande (220a) qui permet de régler au moins un mode vissage, un mode perçage et un mode perçage à percussion, et comprenant un dispositif de protection (226a) qui empêche en mode perçage à percussion un fonctionnement dans le premier rapport de transmission, **caractérisé en ce que** le dispositif de protection (226a) est réalisé au moins en partie d'un seul tenant avec le dispositif de commande (32a), dans lequel un premier moyen de blocage (228a) du dispositif de protection (226a) est façonné sur le premier élément de commande (218a) et un deuxième moyen de blocage (230a) du dispositif de protection (226a) est façonné sur le deuxième élément de commande (220a), et les moyens de blocage (228a, 230a) sont réalisés sous forme de pattes, le premier moyen de blocage (228a) s'étendant en direction du deuxième élément de commande (220a) et le deuxième élément de blocage (230a) s'étendant en direction du premier élément de commande (218a), et le premier élément de blocage et le deuxième élément de blocage coopérant de telle sorte que le dispositif de protection (226a) empêche une commutation au mode perçage à percussion si le premier rapport de transmission est réglé et empêche une commutation sur le premier rapport de transmission si le mode perçage à percussion est réglé.

2. Dispositif d'outil manuel selon la revendication 1, **caractérisé en ce qu'**un couple d'outil maximal dans le premier rapport de transmission est supérieur à 15 Nm.

3. Dispositif d'outil manuel selon l'une quelconque des revendications précédentes, **caractérisé en ce qu'**un couple d'outil maximal dans le deuxième rapport de transmission est inférieur à 15 Nm.

4. Dispositif d'outil manuel selon l'une quelconque des revendications précédentes, **caractérisé par** une unité de limitation de couple réglable (34a) qui est prévue pour limiter un couple d'outil maximal en mode vissage.

5. Dispositif d'outil manuel selon l'une quelconque des revendications précédentes, **caractérisé en ce que** le dispositif de commande (32a) est prévu pour désactiver l'unité de limitation de couple (34a) en mode perçage.

6. Outil manuel comprenant un dispositif d'outil manuel (12a) selon l'une quelconque des revendications précédentes.
